# EUROPEAN PATENT SPECIFICATION

(11) **EP 2 292 667 B1**
(45) Date of publication and mention of the grant of the patent: **20.02.2013**
(21) Application number: 09770243.5
(22) Date of filing: 26.06.2009
(51) Int. Cl.: C08C 19/02, C08F 236/12, C08L 15/00, C08K 5/14

(54) **NITRILE GROUP-CONTAINING HIGHLY SATURATED COPOLYMER RUBBER**
NITRILGRUPPENHALTIGER HOCHGESÄTTIGTER COPOLYMERKAUTSCHUK
CAOUTCHOUC À BASE D'UN COPOLYMÈRE FORTEMENT SATURÉ CONTENANT UN GROUPE NITRILE

(30) Priority: 27.06.2008 JP 2008168641
(43) Date of publication of application: 09.03.2011
(73) Proprietor: Zeon Corporation, Tokyo 100-8246 (JP)
(72) Inventor: YOSHIMURA, Tsutomu, Tokyo 100-8246 (JP); UMETSU, Kiyonori, Tokyo 100-8246 (JP); IKEDA, Shinya, Tokyo 100-8246 (JP)
(74) Representative: Albrecht, Thomas
(86) International application number: PCT/JP2009/061694
(87) International publication number: WO 2009/157533

(56) References cited:
- EP-A1- 0 704 459
- EP-A1- 1 247 835
- WO-A1-2006/090734
- JP-A- 6 340 774
- JP-A- 63 241 046
- JP-A- 2004 018 822
- JP-A- 2008 138 048

## Description

### TECHNICAL FIELD

The present invention relates to a nitrile group-containing highly saturated copolymer rubber, more particularly relates to a nitrile group-containing highly saturated copolymer rubber able to give a cross-linked product excellent in ordinary properties and heat resistance and superior in oil resistance.

### BACKGROUND ART

A nitrile group-containing highly saturated copolymer rubber represented by a hydrogenated acrylonitrile-butadiene copolymer rubber is superior in heat resistance, oil resistance, ozone resistance compared with a general nitrile group-containing copolymer rubber high in a ratio of carbon-carbon unsaturated bonds in its main chain structures such as an acrylonitrile-butadiene copolymer rubber.

However, depending on the content of nitrile groups and ratio of unsaturated bonds in carbon-carbon bonds in the nitrile group-containing highly saturated copolymer rubber, the cold resistance was sometimes inferior to that of a nitrile group-containing copolymer rubber. Further, recently, much better improvement has been sought in the oil resistance.

As opposed to this, to improve the cold resistance of a nitrile group-containing highly saturated copolymer rubber, for example, Patent Document 1 proposes a nitrile group-containing highly saturated copolymer rubber comprising α,β-ethylenically unsaturated nitrile monomer units, α,β-ethylenically unsaturated carboxylic acid ester monomer units, conjugated diene monomer units, and saturated conjugated diene monomer units in predetermined ratios and having a temperature difference of an extrapolated glass transition initiating temperature (Tig) and an extrapolated glass transition end temperature (Teg) in differential scan calorimetry of not more than 10°C.

However, the nitrile group-containing highly saturated copolymer rubber described in Patent Document 1 is superior in cold resistance, but when used as belts used in contact with oil (for example, belts for use as automobile parts) the oil resistance is not necessarily sufficient in view of the recent tougher levels demanded. Therefore, further improvement of the oil resistance has been desired.

### PRIOR ART DOCUMENTS

### PATENT DOCUMENT

Patent Document 1: Japanese Patent Publication (A) No. 2001-114940 (Specification of U.S. Patent No. 6548604)

EP-A-0 704 459 discloses a hydrogenated nitrile rubber, a process for preparation, a crosslinkable rubber composition and a cross-linked rubber product.

### DISCLOSURE OF THE INVENTION

### PROBLEM TO BE SOLVED BY THE INVENTION

The present invention has as its object to provide a nitrile group-containing highly saturated copolymer rubber able to give a cross-linked product excellent in ordinary properties and heat resistance and superior in oil resistance. Further, the present invention nas as its object to provide a cross-linkable rubber composition comprised of the nitrile group-containing highly saturated copolymer rubber to which a cross-linking agent is added and a rubber cross-linked product obtained by cross-linking the cross-linkable rubber composition.

### MEANS FOR SOLVING THE PROBLEMS

The inventors engaged in intensive research to solve the above problems and as a result discovered that a nitrile group-containing highly saturated copolymer rubber containing α, β-ethylenically unsaturated nitrile monomer units (a) and conjugated diene monomer units (b) in predetermined ratios and having a half value width of a peak of a loss tangent (tanδ) in viscoelastic properties when made into a cross-linked product of a range of 5 to 20°C enables the objects to be achieved and thereby completed the present invention.

That is, according to the present invention, there is provided a nitrile group-containing highly saturated copolymer rubber having α,β-ethylenically unsaturated nitrile monomer units (a) and conjugated diene monomer units (b) and having at least part of the conjugated diene monomer units (b) hydrogenated, wherein a content of the α,β-ethylenically unsaturated nitrile monomer units (a) is 37 to 45 wt%, a total of the α,β-ethylenically unsaturated nitrile monomer units (a) and the conjugated diene monomer units (b) is 93 wt% or more, an iodine value is 9 or less, and a half value width of a peak of a loss tangent (tanδ) in the viscoelastic properties when made into a cross-linked product is 5 to 20°C in range.
In the nitrile group-containing highly saturated copolymer rubber of the present invention, preferably the ratio of content of the conjugated diene monomer units (b) is 48 to 63 wt%.

Further, according to the present invention, there is provided a cross-linkable rubber composition containing the above nitrile group-containing highly saturated copolymer rubber and a cross-linking agent.
In the cross-linkable rubber composition of the present invention, preferably the cross-linking agent is an organic peroxide.

Furthermore, according to the present invention, there is provided a rubber cross-linked product obtained by cross-linking the above cross-linkable rubber composition. The rubber cross-linked product of the present invention is preferably used as a part used in contact with oil.

According to the present invention, there is provided a method of production of the above nitrile group-containing highly saturated copolymer rubber comprising the step of: starting copolymerization by using 90 to 99 wt% of the total amount of the monomers when making the total amount of the monomers used for copolymerization as 100 wt%, additionally adding the balance of the total amount of the monomers used for copolymerization, when a polymerization conversion rate reaches 40 to 90%, to obtain the copolymer, and then selectively hydrogenating the copolymer.

### EFFECTS OF THE INVENTION

According to the present invention, it is possible to provide a nitrile group-containing highly saturated copolymer rubber able to give a cross-linked product excellent in ordinary properties and heat resistance and superior in oil resistance, and a rubber cross-linked product obtained by cross-linking this having excellent ordinary properties and heat resistance, and superior oil resistance.

### EMBODIMENTS CARRYING OUT THE INVENTION

### Nitrile Group-Containing Highly Saturated Copolymer Rubber

The nitrile group-containing highly saturated copolymer rubber of the present invention has α,β-ethylenically unsaturated nitrile monomer units (a) and conjugated diene monomer units (b), has at least part of the conjugated diene monomer units (b) hydrogenated, has a ratio of content of the α,β-ethylenically unsaturated nitrile monomer units (a) of 37 to 45 wt%, has a total of the α,β-ethylenically unsaturated nitrile monomer units (a) and the conjugated diene monomer units (b) of 93 wt% or more, has an iodine value of 9 or less, and has a half value width of a peak of a loss tangent (tanδ) in viscoelastic properties when made into a cross-linked product of 5 to 20°C in range.

The monomer forming the α,β-ethylenically unsaturated nitrile monomer units (a) is not particularly limited so long as an α,β-ethylenically unsaturated compound having nitrile groups. Acrylonitrile; α-chloroacrylonitrile, α-bromoaciylonitrile, and other α-halogenoacrylonitriles; methacrylonitrile, ethacrylonitrile, and other α-alkylacrylonitriles; etc. may be mentioned. Among these as well, acrylonitrile and methacrylonitrile are preferable. As the α,β-ethylenically unsaturated nitrile monomer, a plurality of types of these may also be jointly used.

In the nitrile group-containing highly saturated copolymer rubber, the ratio of content of the α,β-ethylenically unsaturated nitrile monomer units (a) is, in the total monomer units, 37 to 45 wt%, preferably 38 to 42 wt%, particularly preferably 39 to 41 wt%. Making the ratio of content of the α,β-ethylenically unsaturated nitrile monomer units (a) in the above range, a cross-linked product superior in oil resistance and cold resistance and having a half value width of a peak of a loss tangent (tanδ) of 5 to 20°C in range can be easily obtained.

As the conjugated diene monomer forming the conjugated diene monomer units (b), 1,3-butadiene, isoprene, 2,3-dimethyl-1,3-butadiene, 1,3-pentadiene may be mentioned. Among these, 1,3-butadiene is preferable.

In the nitrile group-containing highly saturated copolymer rubber, the ratio of content of the conjugated diene monomer units (b) is, in the total monomer units, preferably 48 to 63 wt%, more preferably 51 to 62 wt%, particularly preferably 59 to 61 wt%. Note that, the conjugated diene monomer units (b), at least partially, preferably in 97 to 99.8 wt% with respect to the total amount of the conjugated diene monomer units (b) are contained in the hydrogenated state in the nitrile group-containing highly saturated copolymer rubber. The above ratio of content is the ratio including also the conjugated diene monomer units (b) contained in the hydrogenated state. If the ratio of content of the conjugated diene monomer units (b) is too small, the obtained rubber cross-linked product is liable to fall in elasticity. On the other hand, if too great, the obtained rubber cross-linked product may be impaired in oil resistance, heat aging resistance, chemical resistant stability.

Further, in the nitrile group-containing highly saturated copolymer rubber, the ratio of content of the total of the α,β-ethylenically unsaturated nitrile monomer units (a) and the conjugated diene monomer units (b) is, in the total monomer units, 93 wt% or more, preferably 95 wt% or more, more preferably 98 to 100 wt%. If the ratio of content is too small, the obtained rubber cross-linked product sometimes falls in oil resistance. Note that, the ratio of content of the total of these is the ratio including also the conjugated diene monomer units (b) contained in the hydrogenated state.

Further, the nitrile group-containing highly saturated copolymer rubber may also contain units of other monomers able to copolymerize with the monomers forming α,β-ethylenically unsaturated nitrile monomer units (a) and conjugated diene monomer units (b). As the monomers forming the other copolymerizable monomer units, for example, α,β-ethylenically unsaturated carboxylic acid ester monomers, α,β-ethylenically unsaturated carboxylic acid monomers, α,β-ethylenically unsaturated polyvalent carboxylic acid anhydride monomers, aromatic vinyl monomers, fluorine-containing vinyl monomers, copolymerizable antiaging agents may be mentioned.

As the α,β-ethylenically unsaturated carboxylic acid ester monomers, for example, methyl acrylate, butyl acrylate, n-dodecyl acrylate, methyl methacrylate, and other acrylic acid alkyl esters and methacrylic acid alkyl esters which have 1 to 18 carbon atoms in the alkyl groups; methoxymethyl acrylate, methoxyethyl methacrylate, and other acrylic acid alkoxyalkyl esters and methacrylic acid alkoxyalkyl esters which have 2 to 12 carbon atoms in the alkoxyalkyl groups; α-cyanoethyl acrylate, cyanobutyl methacrylate, and other acrylic acid cyanoalkyl esters and methacrylic acid cyanoalkyl esters which have 2 to 12 carbon atoms in the cyanoalkyl groups; 2-hydroxyethyl acrylate, 2-hydroxyethyl methacrylate, and other acrylic acid hydroxyalkyl esters and methacrylic acid hydroxyalkyl esters which have 1 to 12 carbon atoms in the hydroxyalkyl groups; fluorobenzyl acrylate, fluorobenzyl methacrylate, and other fluorine-substituted benzyl group-containing acrylic acid esters and fluorine-substituted benzyl group-containing methacrylic acid esters; trifluoroethyl acrylate, tetrafluoropropyl methacrylate, and other fluoroalkyl group-containing acrylic acid esters and fluoroalkyl group-containing methacrylic acid esters; dimethyl maleate, dimethyl fumarate, and other unsaturated polyvalent carboxylic acid polyalkyl esters; dimethylaminomethyl acrylate and other amino group-containing α,β-ethylenically unsaturated carboxylic acid esters; may be mentioned.

As the α,β-ethylenically unsaturated carboxylic acid monomers, for example, acrylic acid, methacrylic acid, and other α,β-ethylenically unsaturated monocarboxylic acids; maleic acid, fumaric acid, itaconic acid, and other α,β-ethylenically unsaturated polyvalent carboxylic acids; monomethyl maleate, mono n-butyl maleate, and other maleic acid monoalkyl esters, monocyclohexyl maleate and other maleic acid monocycloalkyl esters, monomethylcyclopentyl maleate and other maleic acid monoalkylcycloalkyl esters, monomethyl fumarate, mono n-butyl fumarate, and other fumaric acid monoalkyl esters, monocyclopentyl fumarate and other fumaric acid monocycloalkyl esters, monoethylcyclohexyl fumarate and other fumaric acid monoalkylcycloalkyl esters, mono n-butyl citraconate and other citraconic acid monoalkyl esters, monocyclohexyl citraconate and other citraconic acid monocycloalkyl esters, monomethylcyclopentyl citraconate and other citraconic acid monoalkylcycloalkyl esters, monomethyl itaconate, mono n-butyl itaconate, and other itaconic acid monoalkyl esters, monocyclopentyl itaconate and other itaconic acid monocycloalkyl esters, monoethylcyclohexyl itaconate and other itaconic acid monoalkylcycloalkyl esters and other partial esters of α,β-ethylenically unsaturated polyvalent carboxylic acids may be mentioned.

As α,β-ethylenically unsaturated polyvalent carboxylic acid anhydride monomers, for example, maleic anhydride etc. may be mentioned.

As aromatic vinyl monomers, styrene, α-methyl styrene, vinyl pyridine may be mentioned.

As fluorine-containing vinyl monomers, fluoroethylvinyl ether, o-trifluoromethyl styrene may be mentioned.

As copolymerizable antiaging agents, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinyl benzyloxy)aniline may be mentioned.

As other copolymerizable monomers, a plurality of types may be jointly used. When including units of these other copolymerizable monomers, the ratio of content in the nitrile group-containing highly saturated copolymer rubber is, in the total monomer units, preferably 7 wt% or less, more preferably 5 wt% or less, furthermore preferably 2 wt% or less.

Note that when making the nitrile group-containing highly saturated copolymer rubber of the present invention into a rubber part used in contact with oil (for example, a belt used as an automobile part ), to improve the obtained rubber cross-linked product in oil resistance, it is preferable that a monomer having carboxylic acid ester groups or carboxyl groups is not used as a copolymer monomer. When including units of such a monomer having carboxylic acid ester groups or carboxyl groups (for example, an α,β-ethylenically unsaturated carboxylic acid ester monomer or α,β-ethylenically unsaturated carboxylic acid monomer, α,β-ethylenically unsaturated polyvalent carboxylic acid anhydride monomer), the ratio of content is preferably made, in the total monomer units, 5 wt% or less.

The nitrile group-containing highly saturated copolymer rubber of the present invention has an iodine value of not more than 9. If the iodine value is too high, the obtained rubber cross-linked product is liable to drop in heat aging resistance and ozone resistance.

Further, the nitrile group-containing highly saturated copolymer rubber of the present invention has a half value width of a peak of a loss tangent (tanδ) in viscoelastic properties when made into a cross-linked product of 5 to 20°C in range, preferably 10 to 17°C in range, more preferably 12 to 15°C in range. By making the half value width of the peak of the loss tangent (tanδ) in the viscoelastic properties when made into a cross-linked product the above range, the obtained rubber cross-linked product can be improved in oil resistance while being excellent in ordinary properties and heat resistance.

The half value width of the peak of the loss tangent (tanδ) in the viscoelastic properties when made into a cross-linked product can for example be measured under the following conditions. That is, it is possible to measure the viscoelasticity under conditions of a measurement frequency of 10Hz, a static strain of 0.5%, a dynamic strain of 0.2%, and a rate of temperature rise of 3°C/min using a viscoelasticity measurement device. Note that, when measuring the viscoelastic properties when made into a cross-linked product, it is also possible that the nitrile group-containing highly saturated copolymer rubber into which the later mentioned cross-linking agent and compounding agents used when preparing a cross-linkable rubber composition are suitably mixed is used to obtain a cross-linked product and the measurement for viscoelastic properties is perfomed by using the obtained cross-linked product.

The nitrile group-containing highly saturated copolymer rubber of the present invention has a Mooney viscosity [ML₁₊₄(100°C)] of preferably 10 to 120, more preferably 30 to 110, particularly preferably 40 to 80. If the Mooney viscosity is too low, the obtained rubber cross-linked product is liable to fall in mechanical properties. On the other hand, if too high, the processability may fall when adding a cross-linking agent to obtain a cross-linkable rubber composition.

### Method of Production of Nitrile Group-Containing Highly Saturated Copolymer Rubber

The method of production of the nitrile group-containing highly saturated copolymer rubber of the present invention is not particularly limited, but it is preferable to use emulsion polymerization using an emulsifier to copolymerize the above-mentioned monomers and prepare a latex of the nitrile group-containing copolymer rubber, then hydrogenate this. At the time of emulsion polymerization, it is possible to use an emulsifier, polymerization initiator, molecular weight adjuster, and other normally used secondary materials for polymerization.

The emulsifier is not particularly limited, but for example, a polyoxyethylene alkyl ether, polyoxyethylene alkylphenol ether, polyoxyethylene alkyl ester, polyoxyethylene sorbitan alkyl ester, or other nonionic emulsifier; a salt of myristic acid, palmitic acid, oleic acid, linolenic acid, or other salt of fatty acid, sodium dodecylbenzene sulfonate or other alkylbenzene sulfonate, higher alcohol sulfuric acid ester salt, alkylsulfosuccinate, or other anionic emulsifier; α,β-unsaturated carboxylic acid sulfo ester, α,β-unsaturated carboxylic acid sulfate ester, sulfoalkylaryl ether, or other copolymerizable emulsifier may be mentioned.
The amount of the emulsifier used, with respect to the total monomer as 100 parts by weight, is preferably 0.1 to 10 parts by weight.

The polymerization initiator is not particularly limited so long as a radical initiator, but potassium persulfate, sodium persulfate, ammonium persulfate, potassium perphosphate, hydrogen peroxide, or other inorganic peroxide; t-butyl peroxide, cumen hydroperoxide, p-mentane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butylperoxyisobutyrate, or other organic peroxides; azobis isobutyronitrile, azobis-2,4-dimethylvaleronitrile, azobiscyclohexane carbonitrile, methyl azobis isobutyrate, and other azo compounds may be mentioned. These polymerization initiators may be used alone or in combinations of two or more types. As the polymerization initiator, an inorganic or organic peroxide is preferable.
When using a peroxide as the polymerization initiator, it is possible to combine it with sodium hydrogen sulfite, ferrous sulfate, or another reducing agent for use as a redox-type polymerization initiator.
The amount of the polymerization initiator used is, with respect to the total monomers as 100 parts by weight, preferably 0.01 to 2 parts by weight.

The molecular weight adjuster is not particularly limited, but t-dodecylmercaptan, n-dodecylmercaptan, octyl mercaptan, or other mercaptans; carbon tetrachloride, dichloromethane, dibromomethane, or other halogenated hydrocarbons; α-methylstyrene dimer; tetraethyl thiuram disulfide, dipentamethylene thiuram disulfide, diisopropyl xanthogenate disulfide, and other sulfur-containing compounds may be mentioned. These may be used alone or in combinations of two or more types. Among these, mercaptans are preferable and t-dodecylmercaptan is more preferable.
The amount of the molecular weight adjuster used is, with respect to the total monomers as 100 parts by weight, preferably 0.1 to 0.8 part by weight.

For the medium of the emulsion polymerization, usually water is used. The amount of the water is, with respect to the total monomers as 100 parts by weight, preferably 80 to 500 parts by weight.

At the time of the emulsion polymerization, furthermore, in accordance with need, a stabilizer, dispersant, pH adjuster, deoxidizer, particle size adjuster, or other secondary materials for polymerization may be used. When using these, their types and amounts of use are not particularly limited either.

In the present invention, when producing the nitrile group-containing highly saturated copolymer rubber, when making the total amount of the monomers used for the copolymerization as 100 wt%, first, 90 to 99 wt% in the total amount of monomers is used to start the copolymerization, then, when the polymerization conversion rate reaches 40 to 90%, the balance of the monomers to be used for the copolymerization (that is, 1 to 10 wt%) is additionally added to thereby obtain the copolymer. Further, when making the total amount of the monomers as 100 wt%, it is preferable to use a monomer forming α,β-ethylenically unsaturated nitrile monomer units (a) for 37 to 53 wt%. By adopting this method, it is possible to control the half value width of the peak of the loss tangent (tanδ) in viscoelastic properties to the above range.

Note that, the ratio of the monomers used at the time of the start of copolymerization is 90 to 99 wt% of the total amount of the monomers, preferably 92 to 98 wt%. That is, the ratio of the monomers added in the middle of the copolymerization is 1 to 10 wt% of the total amount of the monomers, preferably 2 to 8 wt%. By controlling the ratio of the monomers used at the time of the start of copolymerization and the monomers added in the middle of the copolymerization, it is possible to control the half value width of the peak of the loss tangent (tanδ) in the viscoelastic properties to a predetermined range.

Further, the timing of addition of the monomers additionally added in the middle of the copolymerization is the timing when the polymerization conversion rate reaches 40 to 90%, preferably reaches 50 to 80%, more preferably reaches 55 to 75%. Further, when additionally adding monomers in the middle of the copolymerization, they may be added divided into several batches. For example, when adding them ivided into two batches, the first batch is preferably added when the polymerization conversion rate reaches 20 to 50% and the second batch is preferably added when the polymerization conversion rate reaches 50 to 70%.

Further, it is possible to produce the nitrile group-containing highly saturated copolymer rubber of the present invention by selectively hydrogenating the obtained copolymer. Note that, the type and amount of the hydrogenation catalyst used for the hydrogenation and hydrogenation temperature may be determined based on known methods.

### Cross-Linkable Rubber Composition

The cross-linkable rubber composition of the present invention contains the above nitrile group-containing highly saturated copolymer rubber and a cross-linking agent.

The cross-linking agent used in the present invention is not particularly limited so long as one which can cross-link the nitrile group-containing highly saturated copolymer rubber of the present invention, but preferably a sulfur cross-linking agent or organic peroxide cross-linking agent may be mentioned.

As the sulfur cross-linking agent, powdered sulfur, precipitated sulfur, or other sulfur; 4,4'-dithiomorpholine or tetramethyl thiuram disulfide, tetraethyl thiuram disulfide, polymer polysulfide, or other organic sulfur compounds may be mentioned. The amount of the sulfur cross-linking agent used, with respect to the nitrile group-containing highly saturated copolymer rubber as 100 parts by weight, is preferably 0.1 to 5 parts by weight, more preferably 0.2 to 4.5 parts by weight, more preferably 0.3 to 4 parts by weight. In the case of using a sulfur cross-linking agent, if the amount used is too small, the cross-linking density falls and the obtained cross-linked product tends to become larger in compression set. On the other hand, if too great, the obtained cross-linked product becomes insufficient in bending fatigue resistance or the dynamic heat generation becomes higher in some cases.

The organic peroxide cross-linking agent is not particularly limited so long as one used in the rubber industry as a cross-linking agent, but dialkyl peroxides, diacyl peroxides, peroxy esters may be mentioned. Preferably, dialkyl peroxides may be illustrated.
As the dialkyl peroxides, for example, dicumyl peroxide, di-t-butyl peroxide, 2,5-dimethyl-2,5-di(t-butylperoxy)-3-hexine, 2,5-dimethyl-2,5-di(t-butylperoxy)hexane, 1,3-bis(t-butylperoxyisopropyl)benzene may be mentioned.
As diacyl peroxides, for example, benzoyl peroxide, isobutyryl peroxide may be mentioned.
As peroxy esters, for example, 2,5-dimethyl-2,5-bis(benzoylperoxy)hexane, t-butylperoxyisopropyl carbonate may be mentioned.

The amount of the organic peroxide cross-linking agent used, with respect to the nitrile group-containing highly saturated copolymer rubber as 100 parts by weight, is preferably 1 to 16 parts by weight , more preferably 1 to 14 parts by weight, furthermore preferably 1 to 12 parts by weight. In the case of using an organic peroxide cross-linking agent, if the amount used is too small, the cross-linking density falls and the obtained cross-linked product tends to become larger in compression set. On the other hand, if the amount of the organic peroxide cross-linking agent used is too great, the obtained cross-linked product sometimes becomes insufficient in rubber elasticity.

When using a sulfur cross-linking agent as the cross-linking agent, as a cross-linking aid, it is preferable to jointly use zinc white, a guanidine-based cross-linking accelerator, a thiazole-based cross-linking accelerator, a thiuram-based cross-linking accelerator, a dithiocarbamate-based cross-linking accelerator.
Further, when using an organic peroxide cross-linking agent as the cross-linking agent, as a cross-linking aid, it is possible to jointly use triallyl cyanurate, trimethylolpropane trimethacrylate, N,N'-m-phenylene bismaleimide.

The cross-linking aid may be used alone or may be used in a combination of a plurality of types. It may also be used dispersed in clay, calcium carbonate, silica to improve the processability for the rubber composition. The amount of the cross-linking aid used is not particularly limited and may be determined in accordance with the application and required performance of the cross-linked product, type of the cross-linking agent, type of the cross-linking aid.

Further, the cross-linkable rubber composition of the present invention may have blended into it, in addition to the nitrile group-containing highly saturated copolymer rubber and cross-linking agent and the cross-linking aid and cross-linking accelerator added in accordance with need, compounding agents usually used in the rubber field such as, carbon black, silica, or other reinforcing fillers, calcium carbonate, clay, or other nonreinforcing fillers, processing aids, plasticizers, antioxidants, antiozonants, coloring agents. The amounts of these compounding agents used are not particularly limited so long as in a range not obstructing the object or effects of the present invention. Amounts in accordance with the object of compounding may be compounded.

The cross-linkable rubber composition of the present invention may also have rubber other than the nitrile group-containing highly saturated copolymer rubber of the present invention blended into it. The blendable rubber is not particularly limited, but for example when blending a highly unsaturated nitrile group-containing copolymer rubber such as an acrylonitrile-butadiene copolymer rubber, the amount blended is made, with respect to the nitrile group-containing highly saturated copolymer rubber of the present invention as 100 parts by weight, 30 parts by weight or less, preferably 20 parts by weight or less, more preferably 10 parts by weight or less. When blending a highly unsaturated nitrile group-containing copolymer rubber, if the amount blended is too large, the obtained cross-linked product will tend to drop in air pressure heat aging resistance, bending fatigue resistance, elongation, and compression set resistance. Note that, when blending rubber other than the nitrile group-containing highly saturated copolymer rubber of the present invention, it is possible to add the necessary amount of a cross-linking agent able to cross-link these rubber.

The cross-linkable rubber composition of the present invention may be prepared by the method of preparation of general rubber compositions in the same way as other rubber compositions. An internal mixer or an open roll may be used for kneading. When blending a cross-linking agent or a cross-linking aid, after blending the cross-linking agent or cross-linking aid, the temperature is adjusted to become less than the cross-linking start temperature so that cross-linking will not occur during kneading in the same way as the method of preparation of general cross-linkable rubber compositions. Usually, a rubber composition not containing the cross-linking agent, cross-linking aid is prepared, then the ingredients relating to cross-linking are blended and mixed at less than the cross-linking start temperature based.

### Rubber Cross-Linked Product

The rubber cross-linked product of the present invention is one obtained by cross-linking the above cross-linkable rubber composition of the present invention.

The method of cross-linking the cross-linkable rubber composition is not particularly limited, but the temperature at the time of cross-linking is preferably made 100 to 200°C, more preferably 130 to 180°C. If the temperature at the time of cross-linking is too low, the cross-linking time required becomes too long and the obtained rubber cross-linked product sometimes falls in cross-linking density. If the temperature at the time of cross-linking is too high, molding defects sometimes occur.

Further, the cross-linking time differs depending on the cross-linking method, cross-linking temperature, shape of the cross-linked product, but from the viewpoints of the cross-linking density of the obtained cross-linked product and production efficiency is preferably 1 minute to 5 hours in range. The method of heating for cross-linking may be suitably selected from press heating, steam heating, oven heating, hot air heating, or other method used for cross-linking of rubber.

The rubber cross-linked product of the present invention obtained in this way is one obtained using the above-mentioned nitrile group-containing highly saturated copolymer rubber of the present invention, so has a half value width of a peak of a loss tangent (tanδ) in viscoelastic properties of 5 to 20°C in range, maintains good ordinary properties and heat resistance, and has superior oil resistance.

Further, this rubber cross-linked product of the present invention can be suitably used, making use of its characteristics, for parts used in contact with oil, for example, timing belts and other belts submersed in oil.
Alternatively, the cross-linked product of the present invention can be used, other than for belts submersed in oil, for O-rings, packings, diaphragms, oil seals, shaft seals, bearing seals, mechanical seals, well head seals, electrical and electronic equipment seals, air compressor seals, seals for sealing the chlorofluorocabon or fluorohydrocarbons or carbon dioxide used for cooling apparatuses of air-conditioners or compressors for cooling machines for air-conditioning systems, seals for sealing supercritical carbon dioxide or subcritical carbon dioxide used for washing media for precision washing, seals for roller devices (roller bearings, automobile hub units, automobile water pumps, linear guide devices, balls and screws), valves and valve seats, BOP (Blow Out Preventers), platters, and other various types of seal materials; and intake manifold gaskets attached at connecting part of intake manifold and cylinder head, cylinder head gaskets attached at connecting part of cylinder block and cylinder head, rocker cover gaskets attached at connecting part of rocker cover and cylinder head, oil pan gaskets attached at connecting part of oil pan and cylinder block or transmission case, fuel cell separator gaskets attached between a pair of housings sandwiching a unit cell provided with an anode, electrolyte plates, and cathode, top cover gaskets of hard disk drive, and other various types of gaskets; printing rolls, ironmaking rolls, papermaking rolls, industrial use rolls, office machinery rolls, and other various types of rolls; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flowlines, and other various types of hoses; CVJ boots, propeller shaft boots, constant velocity joint boots, rack and pinion boots, and other various types of boots; cushion materials, dynamic dampers, rubber couplings, air springs, vibration isolators, and other damping material rubber parts; dust covers, car interior members, tires, covered cables, shoe soles, electromagnetic wave shields, flexible printed circuit board binders and other binders, fuel cell separators, and other broad applications in the fields of cosmetics and pharmaceuticals, fields coming into contact with food, the electronics field.

### EXAMPLES

Below, the present invention will be explained based on more detailed examples. Note that, below, "parts" are based on weight so long as not indicated otherwise. Further, the tests and evaluations were performed below.

### Viscoelasticity Test (Half Value Width of Peak of Tanδ)

A rubber composition for viscoelasticity test use prepared by the following method was press-formed using a mold at 170°C for 20 minutes while applying pressure to obtain a width 10 mm, length 50 mm, thickness 2.15 mm cross-linked product for viscoelasticity test use. Further, the obtained cross-linked product for viscoelasticity test use was measured by a viscoelasticity measurement device (Explexor 500N, made by GABO QUALIMETER Testanlagen GmbH) under conditions of a measurement frequency: 10Hz, static strain: 0.5%, dynamic strain: 0.2%, measurement temperature range: -50 to 100°C, temperature elevation rate: 3°C/min, chuck distance: 30 mm, measurement mode: tension mode.
Next, a viscoelasticity temperature-tanδ chart was prepared. The temperature at the low temperature side giving a strength of half of the peak value the Tanδ of the chart was made the temperature of the initiating point, the temperature at the high temperature side giving a strength of half of the peak value the Tanδ of the chart was made the temperature of the end point, and the absolute value of defference between temperature of the end point and temperature of the initiating point was made the half value width. Note that when the tanδ value deviates between the initiating point and end point, a baseline is drawn and used for calculating the half value width.

### Iodine Value

Measured in accordance with JIS K 6235.

### Mooney Viscosity (Polymer Mooney)

Measured in accordance with JIS K6300-1. Units are (ML₁₊₄, 100°C).

### Oil Resistance Test

A cross-linkable rubber composition prepared by the following method was press-formed using a mold at 170°C for 20 minutes while applying pressure to obtain a length 20 mm, width 10 mm, thickness 2 mm sheet-shaped cross-linked product. Further, in accordance with JIS K6258, the obtained cross-linked product was immersed in 150°C engine oil (Genuine Castle Oil SM/GF-40W-20, made by Toyota) for 168 hours, measured for volume before and after immersion, and measured for change in volume ΔV (unit: %).

### Heat Resistance

Sheet-shaped rubber cross-linked products the same as those used for evaluation in the above oil resistance tests were punched into JIS No. 3 dumbbell cutter to prepare test pieces. The obtained test pieces were used in accordance with the provisions of JIS K6257 "Aging Test Methods for Vulcanized Rubber", Section 4 " Air Pressure Heat Aging Test (normal Oven Method)" for accelerated aging under conditions of 150°C and 504 hours and measured for elongation at break before and after the accelerated aging. The rate of change of the elongation at break due to the accelerated aging (units: %) was calculated.

### Ordinary Properties (Tensile Strength, 100% Tensile Stress)

Sheet-shaped rubber cross-linked products the same as those used for evaluation in the above oil resistance tests were punched into JIS No. 3 dumbbell cutter to prepare test pieces. Further, the obtained test pieces were used in accordance with JIS K6251 to measure tensile strength and 100% tensile stress of the rubber cross-linked products.

### Example 1

### Production of Latex of Nitrile Copolymer Rubber

A reactor was charged with an emulsifier of potassium oleate in 2 parts, a stabilizer of potassium phosphate in 0.1 part, and water in 150 parts. To this, acrylonitrile in 52 parts, 1,3-butadiene in 48 parts, and a molecular weight adjuster of t-dodecylmercaptan in 0.45 part were added. Further, an activator of ferrous sulfate in 0.015 part and a polymerization initiator of p-menthane hydroperoxide in 0.05 part were added. Emulsion polymerization was started in the presence of these under conditions of 10°C. After the start of polymerization, when the polymerization conversion rate became 65%, 1,3-butadiene in 2 parts were additionally added. Next, when the polymerization conversion rate reached 80%, 0.2 part of hydroxylamine sulfate was added per 100 parts of the monomer to stop the polymerization. Further, after stopping polymerization, the solution was warmed and steam distilled under reduced pressure at 70°C to recover the unreacted monomer, then an antiaging agent of alkylated phenol in 2 parts was added to thereby obtain a latex of nitrile copolymer rubber.

Further, preparing a coagulating solution in 3000 parts in which coagulating agent of calcium chloride in 3 parts was dissolved, this was held at 50°C. Into this coagulating solution, the latex of the nitrile copolymer rubber obtained above was added dropwise to cause the nitrile copolymer rubber to coagulate and obtain crumbs. Next, the obtained crumbs were rinsed, then dried at 50°C under reduced pressure to prepare a nitrile copolymer rubber.

Next, the obtained nitrile copolymer rubber was dissolved in methylisobutyl ketone and a palladium/silica catalyst was used to cause a hydrogenation reaction in a pressure vessel at a hydrogen pressure of 5 MPa, 50°C, and 6 hours to thereby prepare a nitrile group-containing highly saturated copolymer rubber.
Further, the above obtained nitrile group-containing highly saturated copolymer rubber was measured for ratios of contents of monomer units by ¹H-NMR and measured for iodine value.

Further, the obtained nitrile group-containing highly saturated copolymer rubber was used to obtain a rubber composition for a viscoelasticity test as follows.
That is, to the obtained nitrile group-containing highly saturated copolymer rubber in 100 parts, zinc white in 5 parts, substituted diphenylamine (antiaging agent, made by Uniroyal, Nauguard 445) in 1.5 parts, 2-mercaptobenzoimidazole zinc salt (antiaging agent, made by Ouchi Shinko Chemical Industrial, Nocrac MBZ) in 1.5 part, and 1,3-bis(t-butylperoxyisopropyl)benzene (organic peroxide) 40% product (made by Hercules Inc., Vul-cup 40KE) in 7 parts were mixed and kneaded to obtain a rubber composition for viscoelasticity test use.

Further, separate from the above, the obtained nitrile group-containing highly saturated copolymer rubber was used to obtain a cross-linkable rubber composition as follows.
That is, to the nitrile group-containing highly saturated copolymer rubber in 100 parts, zinc white in 5 parts, stearic acid in 1 part, SRF carbon black (made by Asahi Carbon, Asahi #50) in 70 parts, a plasticizer (Adekasizer C-8, made by ADEKA) in 5 parts, substituted diphenylamine (antiaging agent, made by Uniroyal, Nauguard 445) in 1.5 parts, 2-mercaptobenzoimidazole zinc salt (antiaging agent, made by Ouchi Shinko Chemical Industrial, Nocrac MBZ) in 1.5 parts, and 1,3-bis(t-butylperoxyisopropyl)benzene (organic peroxide) 40% product (made by Hercules Inc., Vul-cup 40KE) in 7 parts were mixed and kneaded to obtain a cross-linkable rubber composition.

The rubber composition for viscoelastic tests obtained by the above was used to measure the viscoelasticity and the cross-linkable rubber composition was used to evaluate an oil resistance test, heat resistance test, and ordinary properties (tensile strength, 100% tensile stress). The results are shown in Table 1.

### Example 2

Except for using as the monomers for advance polymerization, instead of acrylonitrile in 52 parts and 1,3-butadiene in 48 parts, acrylonitrile in 40 parts and 1,3-butadiene in 60 parts, changing the monomer added in the middle from 1,3-butadiene in 2 parts to 1,3-butadiene in 3 parts, and changing the timing of addition in the middle to a polymerization conversion rate 67%, the same procedure was followed as in Example 1 to prepare a nitrile group-containing highly saturated copolymer rubber and cross-linkable rubber composition. These were evaluated in the same way as Example 1. The results are shown in Table 1.

### Example 3

Except for using as the monomers for advance polymerization, instead of acrylonitrile in 52 parts and 1,3-butadiene in 48 parts, acrylonitrile in 45 parts and 1,3-butadiene in 55 parts, changing the monomer added in the middle from 1,3-butadiene in 2 parts to 1,3-butadiene in 5 parts, and changing the timing of addition in the middle to a polymerization conversion rate 67%, the same procedure was followed as in Example 1 to prepare a nitrile group-containing highly saturated copolymer rubber and cross-linkable rubber composition. These were evaluated in the same way as Example 1. The results are shown in Table 1.

### Comparative Example 1

Except for using as the monomers for advance polymerization, instead of acrylonitrile in 52 parts and 1,3-butadiene in 48 parts, acrylonitrile in 63 parts and 1,3-butadiene in 37 parts and changing the monomer added in the middle from 1,3-butadiene in 2 parts to 1,3-butadiene in 4 parts, the same procedure was followed as in Example 1 to prepare a nitrile group-containing highly saturated copolymer rubber and cross-linkable rubber composition. These were evaluated in the same way as Example 1. The results are shown in Table 1.

### Comparative Example 2

Except for using as the monomers for advance polymerization, instead of acrylonitrile in 52 parts and 1,3-butadiene in 48 parts, acrylonitrile in 25 parts and 1,3-butadiene in 75 parts and changing the monomer added in the middle from 1,3-butadiene in 2 parts to acrylonitrile in 4 parts, the same procedure was followed as in Example 1 to prepare a nitrile group-containing highly saturated copolymer rubber and cross-linkable rubber composition. These were evaluated in the same way as Example 1. The results are shown in Table 1.

### Comparative Example 3

Except for using as the monomers for advance polymerization, instead of acrylonitrile in 52 parts and 1,3-butadiene in 48 parts, acrylonitrile in 44 parts and 1,3-butadiene in 56 parts and not adding any monomer in the middle, the same procedure was followed as in Example 1 to prepare a nitrile group-containing highly saturated copolymer rubber and cross-linkable rubber composition. These were evaluated in the same way as Example 1. The results are shown in Table 1.

### Comparative Example 4

Except for using as the monomers for advance polymerization, instead of acrylonitrile in 52 parts and 1,3-butadiene in 48 parts, acrylonitrile in 9 parts, 1,3-butadiene in 47 parts, and butyl acrylate in 13 parts and changing the monomer added in the middle from 1,3-butadiene in 2 parts to acrylonitrile in 10 parts, 1,3-butadiene in 10 parts, and butyl acrylate in 10 parts, the same procedure was followed as in Example 1 to prepare a nitrile group-containing highly saturated copolymer rubber and cross-linkable rubber composition. These were evaluated in the same way as Example 1. The results are shown in Table 1.

**Table 1**

| | | | Example | | | Comparative Example | | | |
|---|---|---|---|---|---|---|---|---|---|
| | | | 1 | 2 | 3 | 1 | 2 | 3 | 4 |
| Monomers used at time of start of polymerization | | | | | | | | | |
| | Acrylonitrile | (parts by weight) | 52 | 40 | 45 | 63 | 25 | 44 | 9 |
| | 1,3-butadiene | (parts by weight) | 48 | 60 | 55 | 37 | 75 | 56 | 47 |
| | Butylacrylate | (parts by weight) | 0 | 0 | 0 | 0 | 0 | 0 | 13 |
| Monomers added in middle | | | | | | | | | |
| | Acrylonitrile | (parts by weight) | - | - | - | - | 4 | - | 10 |
| | butadiene | (parts by weight) | 2 | 3 | 5 | 4 | - | - | 10 |
| | Butylacrylate | (parts by weight) | - | - | - | - | - | - | 10 |
| | Iodine value | (%) | 8 | 8 | 8 | 8 | 8 | 8 | 8 |
| Polymerization conversion rate at addition in middle | | (%) | 65 | 67 | 67 | 65 | 65 | - | 65 |
| Final polymerization conversion rate | | (%) | 80 | 80 | 80 | 80 | 80 | 80 | 80 |
| Nitrile group-containing highly saturated copolymer rubber | | | | | | | | | |
| | Acrylonitrile units | (wt%) | 44 | 37 | 40 | 50 | 25 | 40 | 20 |
| | 1,3-butadiene units | (wt%) | 56 | 63 | 60 | 50 | 75 | 60 | 60 |
| | Butylacrylate units | (wt%) | - | - | - | - | - | - | 20 |
| | Initiating point of half value width of peak of tan ζ | (°C) | -7.8 | -13.4 | -11.0 | -3.0 | -23.0 | -15.3 | -18.0 |
| | End point of half value width of peak of tan δ | (°C) | 11.3 | 0.4 | 5.1 | 17.0 | -5.0 | 8.3 | -8.0 |
| | Half value width temperature of peak of tan δ | (°C) | 19.1 | 13.8 | 16.1 | 20.0 | 18.0 | 23.6 | 10.0 |
| | Polymer Mooney viscosity ML₁₊₄ (100°C) | | 70 | 64 | 70 | 73 | 76 | 64 | 75 |
| Cross-linked product | | | | | | | | | |
| | Oil resistance ΔV (150° C × 168hr) | (%) | -1.0 | +1.7 | +1.0 | -1.5 | +7.0 | +1.5 | +6.5 |
| | Heat resistance (150° C × 504hr) | (%) | -42 | -17 | -29 | -60 | -30 | -60 | -30 |
| | Tensile strength | (MPa) | 25 | 22 | 23 | 27 | 22 | 23 | 21 |
| | 100% tensile stress | (MPa) | 7.7 | 5.9 | 5.6 | 9.1 | 4.6 | 5.5 | 4.4 |

In Table 1, the "initiating print of the half value width of peak of tanδ means the point at the low temperature sind giving half of the strength with respect to the peak value of tanδ in the viscoelastic properties, while the "end point of half value width of peak of tanδ" means the point at the high temperature side giving half of the strength with respect to the peak value of tanδ in the viscoelastic properties.

From Table 1, when the total of the the acrylonitrile units 37 to 45 wt% and the acrylonitrile units and 1,3-butadiene units is 93 wt% or more, the iodine value is 9 or less, and the half value width of the peak of the loss tangent (tanδ) in the viscoelastic properties is 5 to 20°C in range, it is confirmed that the ordinary properties (tensile strength, 100% tensile stress) and heat resistance are good and a superior oil resistance can be realized (Examples 1 to 3).

On the other hand, when the ratio of the acrylonitrile units was too high, the heat resistance was inferior (Comparative Example 1), while when the ratio of the acrylonitrile units was too low, the oil resistance was inferior (Comparative Example 2). Further, when the half value width of the peak of the loss tangent (tanδ) in the viscoelastic properties was over 20°C, the heat resistance was inferior (Comparative Example 3). Furthermore, when the ratio of the butylacrylate units was 20 wt% and the total of the acrylonitrile units and 1,3-butadiene units was less than 93 wt%, the oil resistance was inferior (Comparative Example 4).

## Claims

1. A nitrile group-containing highly saturated copolymer rubber having α,β-ethylenically unsaturated nitrile monomer units (a) and conjugated diene monomer units (b) and having at least part of said conjugated diene monomer units (b) hydrogenated, wherein
a content of said α,β-ethylenically unsaturated nitrile monomer units (a) is 37 to 45 wt%, a total of said α,β-ethylenically unsaturated nitrile monomer units (a) and said conjugated diene monomer units (b) is 93 wt% or more, an iodine value as determined according to the method as described in the description is 9 or less, and
a half value width of a peak of a loss tangent (tanδ) in the viscoelastic properties when made into a cross-linked product is 5 to 20°C in range.

2. The nitrile group-containing highly saturated copolymer rubber as set forth in claim 1, wherein the ratio of content of said conjugated diene monomer units (b) is 48 to 63 wt%.

3. A cross-linkable rubber composition containing the nitrile group-containing highly saturated copolymer rubber as set forth in claim 1 or 2 and a cross-linking agent.

4. The cross-linkable rubber composition as set forth in claim 3 wherein said cross-linking agent is an organic peroxide.

5. A rubber cross-linked product obtained by cross-linking the cross-linkable rubber composition as set forth in claim 3 or 4.

6. The rubber cross-linked product as set forth in claim 5 which is a part used in contact with oil.

7. A method of production of the nitrile group-containing highly saturated copolymer rubber as set forth in claim 1 or 2 comprising the step of:
starting copolymerization by using 90 to 99 wt% of the total amount of the monomers when making the total amount of the monomers used for copolymerization as 100 wt%,
additionally adding the balance of the total amount of the monomers used for copolymerization, when a polymerization conversion rate reaches 40 to 90%, to obtain the copolymer, and then
selectively hydrogenating the copolymer.

## Patentansprüche

1. Nitrilgruppenhaltiger hochgesättigter Copolymerkautschuk, der α,β-ethylenisch ungesättigte Nitrilmonomereinheiten (a) und konjugierte Dienmonomereinheiten (b) hat und der wenigstens einen Teil der konjugierten Dienmonomereinheiten (b) hydriert hat, wobei
der Gehalt an den α,β-ethylenisch ungesättigten Nitrilmonomereinheiten (a) 37 bis 45 Gew.-% ist, die Summe der α,β-ethylenisch ungesättigten Nitrilmonomereinheiten (a) und der konjugierten Dienmonomereinheiten (b) 93 Gew.-% oder mehr ist, die Iodzahl, wie sie nach der in der Beschreibung beschriebenen Methode bestimmt wird, 9 oder weniger ist und
die Halbwertsbreite eines Peaks des Verlustfaktors (tanδ) bei den viskoelastischen Eigenschaften, wenn ein vernetztes Produkt hergestellt wird, im Bereich von 5 bis 20°C liegt.

2. Nitrilgruppenhaltiger hochgesättigter Copolymerkautschuk, wie in Anspruch 1 beschrieben, wobei der Verhältnisanteil der konjugierten Dienmonomereinheiten (b) 48 bis 63 Gew.-% ist.

3. Vernetzbare Kautschukzusammensetzung, die den nitrilgruppenhaltigen hochgesättigten Copolymerkautschuk, wie in Anspruch 1 oder 2 beschrieben, und ein Vernetzungsmittel enthält.

4. Vernetzbare Kautschukzusammensetzung, wie in Anspruch 3 beschrieben, wobei das Vernetzungsmittel ein organisches Peroxid ist.

5. Vernetztes Kautschukprodukt, das durch Vernetzung der vernetzbaren Kautschukzusammensetzung, wie in Anspruch 3 oder 4 beschrieben, erhalten wird.

6. Vernetztes Kautschukprodukt, wie in Anspruch 5 beschrieben, das ein Teil ist, das in Kontakt mit Öl verwendet wird.

7. Verfahren zur Herstellung des nitrilgruppenhaltigen hochgesättigten Copolymerkautschuks, wie in Anspruch 1 oder 2 beschrieben, umfassend die Schritte:
Starten einer Copolymerisation unter Verwendung von 90 bis 99 Gew.-% der Gesamtmenge der Monomeren, wenn die Gesamtmenge der Monomeren, die zur Copolymerisation verwendet wird, als 100 Gew.-% genommen wird,
zusätzliches Zusetzen des Restes der Gesamtmenge der Monomeren, die zur Copolymerisation verwendet wird, wenn die Polymerisationsumwandlungsrate 40 bis 90% erreicht, um das Copolymer zu erhalten, und danach
selektives Hydrieren des Copolymers.

## Revendications

1. Caoutchouc de copolymère hautement saturé contenant un groupe nitrile ayant des motifs monomères de nitrile α,β-éthyléniquement insaturé (a) et des motifs monomères de diène conjugué (b) et ayant au moins une partie desdits motifs monomères de diène conjugué (b) hydrogénés, dans lequel
une teneur desdits motifs monomères de nitrile α,β-éthyléniquement insaturé (a) est de 37 à 45 % en poids, un total desdits motifs monomères de nitrile α,β-éthyléniquement insaturé (a) et desdits motifs monomères de diène conjugué (b) est de 93 % en poids ou plus, un indice d'iode tel que déterminé selon la méthode telle que décrite dans la description est de 9 ou moins, et
une largeur à mi-hauteur d'un pic d'une tangente de perte (tanδ) dans les propriétés viscoélastiques lors d'une transformation en un produit réticulé est dans la plage de 5 à 20 °C.

2. Caoutchouc de copolymère hautement saturé contenant un groupe nitrile selon la revendication 1, dans lequel le rapport de teneur desdits motifs monomères de diène conjugué (b) est de 48 à 63 % en poids.

3. Composition de caoutchouc réticulable contenant le caoutchouc de copolymère hautement saturé contenant un groupe nitrile tel que précisé dans la revendication 1 ou 2 et un agent de réticulation.

4. Composition de caoutchouc réticulable selon la revendication 3, dans laquelle ledit agent de réticulation est un peroxyde organique.

5. Produit réticulé de caoutchouc obtenu en réticulant la composition de caoutchouc réticulable telle que précisée dans la revendication 3 ou 4.

6. Produit réticulé de caoutchouc selon la revendication 5, qui est une pièce utilisée en contact avec de l'huile.

7. Procédé de production du caoutchouc de copolymère hautement saturé contenant un groupe nitrile tel que précisé dans la revendication 1 ou 2, comprenant les étapes consistant à :
démarrer une copolymérisation en utilisant 90 à 99 % en poids de la quantité totale des monomères lorsque la quantité totale des monomères utilisés pour la copolymérisation représente 100 % en poids,
ajouter additionnellement le reste de la quantité totale des monomères utilisés pour la copolymérisation, lorsqu'un taux de conversion de polymérisation atteint 40 à 90 %, pour obtenir le copolymère, puis
hydrogéner sélectivement le copolymère.
